# EUROPEAN PATENT SPECIFICATION

(11) **EP 2 674 897 B1**
(45) Date of publication and mention of the grant of the patent: **06.03.2019**
(21) Application number: 12305682.2
(22) Date of filing: 15.06.2012
(51) Int. Cl.: G06K 19/077

(54) **A data carrier having a microcircuit card and a method for making such a card**
Datenträger mit einer Chipkarte und entsprechendes Herstellungsverfahren
Support de données ayant une carte à microcircuit et procédé de fabrication d'une telle carte

(43) Date of publication of application: 18.12.2013
(73) Proprietor: IDEMIA France, 92400 Courbevoie (FR)
(72) Inventor: Huet, Mickaël, 35370 BREAL SOUS VITRE (FR); Bosquet, Olivier, 35500 VITRE (FR)
(74) Representative: Santarelli

(56) References cited:
- DE-U1- 20 020 171
- US-A1- 2002 007 554
- US-A1- 2008 083 831
- US-B1- 6 398 114
- US-B1- 6 964 377
- US-B1- 7 183 636

## Description

### Field of the Invention

The present invention relates to a data carrier having a microcircuit card and in particular but not exclusively to a microcircuit card that is in the form of a card that can be detached from a carrier card. The invention further relates to a method for making such a microcircuit card and carrier card.

### Background of the Invention

Microcircuit cards which are also known as microchip or SIM cards are of a size and shape that is generally defined by industry standards. Typically the standard formats used are ID-000 formats which are used mainly for mobile telephone operator subscriber identification cards, known as SIM (Subscriber Identification Module) cards or plug in SIM cards in the case, for example, of USIM (Universal Subscriber Identification Module) cards. Other formats used are ID-1 format cards (derived from ISO Standard 7810) which are used for bank cards and credit cards, for example.

The manufacturing costs of ID-000 cards are usually much lower than for ID-1 format cards as there is less material that is used to make the card and less area to be printed on. However, ID-000 cards are very small, especially if they are to be inserted into a mobile communication device such as a mobile telephone. This means that the handling of ID-000 cards per se can be difficult and they are relatively easy to misplace. As a consequence, ID-000 cards are often incorporated in a carrier card which is generally of the size and shape of an ID-1 card, which are designed to be routinely handled by individuals and so they provide a good supporting carrier body for ID-000 cards. When there is a card which is comprised of a SIM card of an ID-000 format where the microcircuit card is precut into an ID-1 format card body, a user can either use the ID-1 card by inserting it into a reader or the ID-000 format microcircuit card can be removed from the carrier ID-1 card body and inserted into a mobile device, for example, a mobile telephone.

Currently a SIM card is incorporated within the body of a support card, for example the periphery of the ID-000 card is bounded by the carrier card. This provides a secure construct for supporting the card. The cards are required to be robust so as to minimize damage and so are being made out of harder materials such as PVC (Polyvinyl Chloride). The process of producing these cards includes punching out a portion of the outline of the microcircuit card and subsequently making one or more pre-cuts along the remainder of the microcircuit outline. The pre-cutting is done using one or more beveled blades and as a consequence of the bevel the blades exert a compressive force on the microcircuit card. As the microcircuit card is restrained by the remainder of the support card when the pre-cutting is taking place, the compressive force produced can cause the microcircuit card to wrap, typically bending the card. This can sometimes damage the card that is produced and if so, the card has to be discarded which leads to wastage and increased manufacturing costs.

DE - 200 20 171 U1 discloses a smart card produced with a SIM module that is set into an area with a pattern of slots ; support sections between the slots are sufficiently thin such that the SIM module can be easily separated from the main carrier. It is known from US - 6 964 377 a smart card in which a SIM module can further be reduced in size by breaking a precut line of weakness. US - 2008/0083831 teaches a ternary card assembly in which a smart card and an information tab are detachably connected through an intermediate element; the tab is detachably connected to the carrier card along a breakaway link at a distance to the smart card. US - 2002/0007554 discloses a configuration where a small card is defined with a continuous cut-out (this small card is connected to the carrier via a underlying film). US - 7 183 636 discloses a carrier with slots generating pressure forces on the edges of a cavity intended for reception for a small card.

The present invention seeks to overcome the problems associated with known cards and production methods by providing a card and method that avoids stresses on the card that can damage it during manufacture.

### Summary of the Invention

The invention is defined by the independent claims.
Preferred embodiments are set out in the dependent claims.

According to a first aspect of the invention there is provided a data carrier according to claim 1.

The first cut out is near to the line of weakness in order to reduce the stress of the material that makes up the card during manufacture and more particularly during the pre-cutting of the card with a blade.

The frangible area may comprise at least one second cut out and said releasable connections comprise bridges formed across the further cut out.

It is envisaged that each end of the first cut out has a nose. This means that each end is rounded, having a circumference rather than a straight edge.

In an embodiments, the first cut out is linear and is of a length that is greater than the line of weakness. It is envisaged that the length of the linear cut out is 12.5 mm plus or minus 5mm.

It is preferred that the distance between the two ends of the cut out is 7.8 mm plus or minus 1mm, more preferably 0.8 mm. Preferably the distance between the two ends is 0.7 of that between the two ends of the first cut out.

Preferably the distance between the line of weakness and the first cut out is 1.5mm plus or minus 1 mm, more preferably 0.8 mm.

Preferably the linear cut out has a width of 1mm plus or minus 1 mm, more preferably 0.8mm.

It is envisaged that the distance between the line of weakness and the first cut out is 1.2mm, the width of the first cut out is 1mm, and the length of the first cut out is 12.5mm. This means that the ratio between the distance, width and length is 1:0.8:10.

It is envisaged that the linear cut out is filled with a material that is softer than the material forming the carrier card. Preferably the material filling the linear cut out is a foamed material.

It is envisaged that the surface of the card is polycarbonate with a thickness of 0.76mm +/-0.08, and a Shore D hardness of 85. However the card may be made from other material used in the card industry such as PVC (polyvinylchloride), ABS (acrylonitrile-butadiene-styrene) ABS PVC (acrylonitrile-butadiene-styrene polyvinyl chloride), PET (polyethylene terephthalate) or even a paper polymer mix or laminate.

According to a further aspect of the invention there is provided a method of making a data carrier (1) according to claim 10.

It is envisaged that during the formation of the pre-cut the carrier card is flexed during the cutting process.

### Brief Description of the Figures

An embodiment of the invention will be described with reference to and as illustrated in the accompanying figures by way of example only, in which:
Figure 1 shows: a planar view of a carrier card and microcircuit card according to the prior art;
Figure 2 shows: a planar view of a carrier card and microcircuit card according to an embodiment of the invention; and
Figure 3 shows: a more detailed view of the arrangement of the ends of the periphery of the microcircuit card and a linear cut out in the carrier card.

### Detailed Description of Embodiments of the Invention

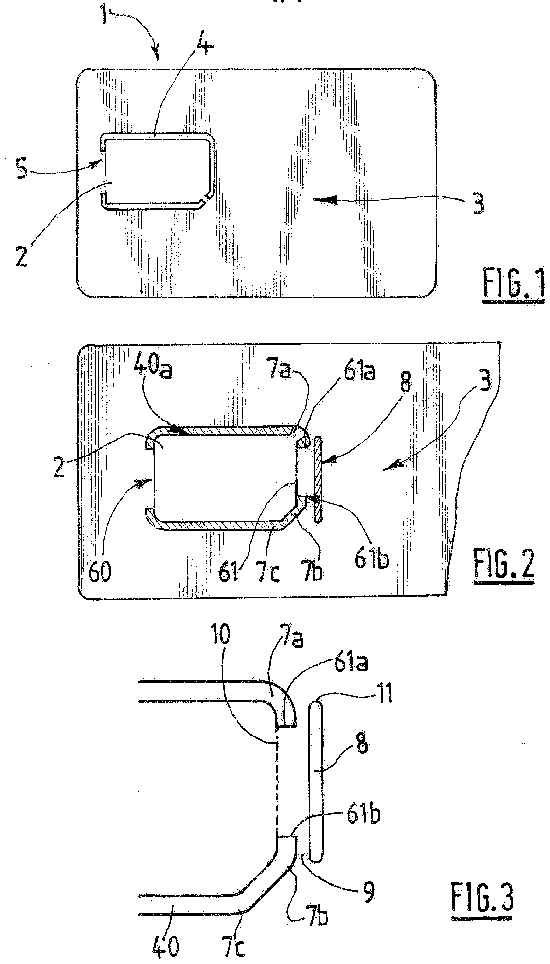

Figure 1 shows a carrier card and microcircuit card according to a prior art arrangement. The combined carrier card and microcircuit card is generally shown as 1 in the figure with the microcircuit card being shown as smaller card 2 within the larger carrier card 3. The carrier card is shown as being of the ID-1 format for cards, which is a rectangular card with the dimensions of approximately 85.60mm x 53.98 mm x 0.76mm. The card is generally rectangular with two longer sides and two shorter sides. The corners of the carrier card are rounded and the microcircuit card 2 mirrors the general shape of the carrier card 3 but it is of smaller dimensions and is generally of the ID-000 format with the dimensions of 25mm × 15mm. Again the microcircuit card has rounded corners.

The microcircuit card is defined by a cut out 4 which has a series of bridges 5 that connect the microcircuit card and the carrier card. The bridges have lines of weakness that make the connection between the carrier card and the microcircuit card frangible so the two can be separated when the microcircuit card is to be used.

Figure 2 illustrates a carrier card and microcircuit card according to an embodiment of the present invention. There is a bridge 60, which is positioned at the shorter end of the rectangular microcircuit card that is in proximity to the edge of the carrier card. At the opposite shorter end of the microcircuit card there is again a bridge 61 which is defined by the two ends 61a and 61b of the cut out 40. The ends of the cut out are straight and each has a facing end, with the facing ends being substantially parallel to one another. The corner 7a of the microcircuit card that is closest to end 61a is rounded and actually form a distinct corner, while the corner 7b of the card closest to end 61b is longer and provided by two corners, with the second corner 7b being in the axis of the bridge 61, while the other corner 7c is on a separate axis. Spaced from the connector 61 is a further, linear, cut out 8 which runs parallel to line of the connector 61 which has a pre-cut (not shown) in the connector that forms a bridge between the carrier card 3 and the microcircuit card 2.

Figure 3 shows in more detail the end of the microcircuit card which is in proximity to a linear cut out 8. The cut out 40 the defines the proximity of the microcircuit card is provided as at least two cut outs (or one continuous cut out) that terminates with two ends 61a and 61b each having a flat face the faces one another across a bridge having a pre-cut line of weakness 10. This bridge, along with other bridges if present, form connectors between the microcircuit card and the carrier card. There are corners leading up to the ends 61a and 61b. The corner closest to 61a being a single corner 7a and the other corner 7b closest to face 61b leading to a second corner 7c.

The linear cut out 8 is parallel to the line of weakness 10 and is positioned towards the centre of the carrier card body, i.e. outside the periphery of the microcircuit card. However it is envisaged that the linear cut out could be within the body of the microcircuit card. Further the ends of the linear cut out are rounded unlike the ends 61a and 61b of the cut out 40 that defines the periphery of the microcircuit card. The ends of the linear cut out extend beyond ends 61a and 61b of cut out 40. The two ends are in one axis on the card and the linear cut out is in a second axis which leaves a gap between the ends 61a and 61b. This gap is approximately 1mm. It is envisaged that the distance between the first and second axis is 1.2mm the width of the linear cut out is 1mm and the length of the linear cut out is 12.5mm. This means that the ratio between the distance, width and length is 1:0.8:10. As shown, the first axis A1 is parallel to the second axis A2.

The use of the linear cut out 8 allows for accurate card production. The perimeter of the microcircuit card is punched out using a compression tool. Areas are left as connectors or bridges 7. These bridges need to be weakened to allow the microcircuit card to be easily detached from the carrier card and this is done using pre-cuts that form lines of weakness. When cutting a pre-cut line of weakness 10, a beveled blade is used and as the blade penetrates the card as the thickened surface of the bevel passes through the card surface is causes deformation of the card in the area around ends 61a and 61b. This can cause distortion in other areas of the card around the bridge 61 and if the card is printed, it can give a visual distortion of the print surface. The use of the linear cut out allows for a degree of give in the card surface, especially if the card that is being formed is made of a harder plastic such as a polycarbonate. Compression forces that are generated extend towards the linear cut out and this absorbs those forces. The air space allows for a degree of give or it may be that the linear cut out is packed with a material that can absorb forces such as a foam. The use of rounded ends on the linear cut out again helps to distribute forces across the surface of the card. It will however be appreciated that the further cut out 8 may be formed in other shapes, such as a curve, that provides the ability to absorb the compressive forces generated when forming the pre-cuts.

It will also be appreciated that the periphery of the card may be at partially defined by a frangible area other than a cut out. For example, one or more pre-cuts may be made to define the periphery, at least in part.

The invention allows for the production of a microcircuit card that is cleanly cut and has no areas of deformation so adding to the quality and quality control of the card during manufacture.
formed in other shapes, such as a curve, that provides the ability to absorb the compressive forces generated when forming the pre-cuts.

It will also be appreciated that the periphery of the card may be at partially defined by a frangible area other than a cut out. For example, one or more pre-cuts may be made to define the periphery, at least in part.

The invention allows for the production of a microcircuit card that is cleanly cut and has no areas of deformation so adding to the quality and quality control of the card during manufacture.

## Claims

1. A data carrier (1) comprising a carrier card (3) in ID-1 format and a microcircuit card (2) attached to said carrier card (3),
said microcircuit card being defined in the carrier card by one frangible area (40) in said carrier card (3) which forms the periphery of the microcircuit card, said microcircuit card being generally rectangular with two longer sides and two shorter sides, a first one of these shorter sides being closer to an edge of the carrier card than a second one of the shorter sides which is opposite this first shorter side,
said periphery having one or more releasable connections (60, 61) between the microcircuit card (2) and the carrier card (3) thereby attaching said microcircuit card and carrier card to one another, one of said one or more releasable connections being located in the second shorter side,
said releasable connection (60, 61) located in the second shorter side having a line of weakness (10) formed therein,
**characterized in that** the carrier card (3) includes, outside the periphery of the microcircuit card (2), at least one first cut-out (8) extending parallel to and along the line of weakness (10) provided in the releasable connection in the second shorter side, this first cut-out having ends, the distance between the line of weakness and the cut-out being 1.5 mm plus or minus 1 mm, so that any compression forces which have been generated when forming the weakness line have been made have been absorbed by the first cut-out.

2. A data carrier (1) according to claim 1, wherein the ends of the first cut-out are rounded.

3. A data carrier (1) according to claim 1 or claim 2 wherein the first cut-out (8) is of a length that is equal to or greater than the length of the line of weakness.

4. A data carrier (1) according to claim 3, wherein the length of the cut-out (8) is 12.5 mm plus or minus 1mm.

5. A data carrier (1) according to any preceding claim, wherein the length of the line of weakness is 7.8 mm plus or minus 1mm.

6. A data carrier (1) according to any preceding claim wherein first cut-out (8) has a width of 1mm plus or minus 0.8mm.

7. A data carrier (1) according to any claims 1 to 3 wherein the distance between the line of weakness (10) and the first cut-out (8) is 1.2mm, the width of this cut-out (8) is 1mm, and the length of this cut-out is 12.5mm.

8. A data carrier (1) according to any preceding claim wherein the first cut-out (8) is filled with a material that is softer than the material forming the carrier card (3).

9. A data carrier (1) according to any preceding claim wherein the surface of the card is formed of polycarbonate.

10. A method of making a data carrier (1) comprising a carrier card (3) in ID-1 format and a microcircuit card (2) attached to said carrier card (3), said method including the steps of:
forming a frangible area (40) that defines a periphery for the microcircuit card, together with releasable connections (60) between the microcircuit card and the carrier card, said microcircuit card being generally rectangular with two longer sides and two shorter sides, with a first one of the shorter sides being closer to an edge of the carrier card than a second one of the shorter sides which is opposite this first one shorter side, one of the releasable connections being provided in this second shorter side; and
forming a line of weakness (61) in at least the releasable connection provided in the second shorter side, **characterized in that** during the stage of removing material to form the periphery a first cut-out (8) having ends is formed outside this periphery, parallel to and along the line of weakness of the releasable connection provided in the second shorter side, the distance between the line of weakness and the cut-out being 1.5 mm plus or minus 1 mm, so that any compression forces which have been generated during the step of forming the weakness line are absorbed by this first cut-out.

11. A method according to claim 10, wherein forming the frangible area includes stamping out apertures in the carrier card to define the periphery of the microcircuit card and the releasable connections comprise bridges formed across the apertures.

12. A method according to claim 10 or claim 11, wherein the first cut-out is formed with rounded ends forming a nose.

13. A method according to claim 11, wherein the stamping process involves forming the periphery of the card at the same time as forming the first cut-out (8) or said stamping process involves forming the periphery of the card sequentially to forming the first cut-out (8).

14. A method according to any of claims 10 to 13 for the production of an ID-000 card in the ID-1 card.

## Patentansprüche

1. Datenträger (1), umfassend eine Trägerkarte (3) im ID-1-Format und eine Chipkarte (2), die an der Trägerkarte (3) befestigt ist,
wobei die Chipkarte in der Trägerkarte durch einen zerbrechlichen Bereich (40) in der Trägerkarte (3) definiert ist, der die Peripherie der Chipkarte bildet, wobei die Chipkarte allgemein rechteckig mit zwei längeren Seiten und zwei kürzeren Seiten ist,
wobei eine erste dieser kürzeren Seiten näher an einem Rand der Trägerkarte als eine zweite dieser kürzeren Seiten ist, die dieser ersten kürzeren Seite gegenüberliegt,
wobei die Peripherie eine oder mehrere lösbare Verbindungen (60, 61) zwischen der Chipkarte (2) und der Trägerkarte (3) aufweist, wodurch die Chipkarte und die Trägerkarte aneinander befestigt sind, wobei eine der einen oder mehreren lösbaren Verbindungen sich an der zweiten kürzeren Seite befindet,
wobei die lösbare Verbindung (60, 61), die sich an der zweiten kürzeren Seite befindet, eine darin gebildete Sollbruchlinie (10) aufweist,
**dadurch gekennzeichnet, dass** die Trägerkarte (3) außerhalb der Peripherie der Chipkarte (2) mindestens einen ersten Ausschnitt (8) einschließt, der sich parallel zu und entlang der Sollbruchlinie (10) erstreckt, die in der lösbaren Verbindung an der zweiten kürzeren Seite bereitgestellt ist, wobei dieser erste Ausschnitt Enden aufweist, der Abstand zwischen der Sollbruchlinie und dem Ausschnitt 1,5 mm plus oder minus 1 mm beträgt, so dass jegliche Kompressionskräfte, die bei der Bildung der Sollbruchlinie erzeugt wurden, durch den ersten Ausschnitt absorbiert werden.

2. Datenträger (1) nach Anspruch 1, wobei die Enden des ersten Ausschnitts gerundet sind.

3. Datenträger (1) nach Anspruch 1 oder Anspruch 2, wobei der erste Ausschnitt (8) eine Länge aufweist, die gleich oder größer als die Länge der Sollbruchlinie ist.

4. Datenträger (1) nach Anspruch 3, wobei die Länge des Ausschnitts (8) 12,5 mm plus oder minus 1 mm ist.

5. Datenträger (1) nach einem der vorhergehenden Ansprüche, wobei die Länge der Sollbruchlinie 7,8 mm plus oder minus 1 mm ist.

6. Datenträger (1) nach einem der vorhergehenden Ansprüche, wobei der erste Ausschnitt (8) eine Breite von 1 mm plus oder minus 0,8 mm aufweist.

7. Datenträger (1) nach einem der Ansprüche 1 bis 3, wobei der Abstand zwischen der Sollbruchlinie (10) und dem ersten Ausschnitt (8) 1,2 mm beträgt, die Breite dieses Ausschnitts (8) 1 mm beträgt, und die Länge dieses Ausschnitts 12,5 mm beträgt.

8. Datenträger (1) nach einem der vorhergehenden Ansprüche, wobei der erste Ausschnitt (8) mit einem Material gefüllt ist, das weicher als das Material ist, welches die Trägerkarte (3) bildet.

9. Datenträger (1) nach einem der vorhergehenden Ansprüche, wobei die Oberfläche der Karte aus Polycarbonat gebildet ist.

10. Verfahren zur Herstellung eines Datenträgers (1), umfassend eine Trägerkarte (3) im ID-1-Format und eine Chipkarte (2), die an der Trägerkarte (3) befestigt ist, wobei das Verfahren die Schritte einschließt:
Bilden eines zerbrechlichen Bereichs (40), der zusammen mit lösbaren Verbindungen (60) zwischen der Chipkarte und der Trägerkarte eine Peripherie für die Chipkarte definiert, wobei die Chipkarte allgemein rechteckig mit zwei längeren Seiten und zwei kürzeren Seiten ist, wobei eine erste der kürzeren Seiten näher an einem Rand der Trägerkarte ist als eine zweite der kürzeren Seiten, die dieser ersten einen kürzeren Seite gegenüber liegt, wobei eine der lösbaren Verbindungen an dieser zweiten kürzeren Seite bereitgestellt wird; und
Bilden einer Sollbruchlinie (61) in mindestens der lösbaren Verbindung, die an der zweiten kürzeren Seite bereitgestellt wird, **dadurch gekennzeichnet, dass** während der Stufe des Entfernens von Material, um die Peripherie zu bilden, ein erster Ausschnitt (8) mit Enden außerhalb dieser Peripherie parallel zu und entlang der Sollbruchlinie der lösbaren Verbindung gebildet wird, die an der zweiten kürzeren Seite bereitgestellt wird, wobei der Abstand zwischen der Sollbruchlinie und dem Ausschnitt 1,5 mm plus oder minus 1 mm beträgt, so dass jegliche Kompressionskräfte, die während des Schritts der Bildung der Sollbruchlinie erzeugt worden sind, durch diesen ersten Ausschnitt absorbiert werden.

11. Verfahren nach Anspruch 10, wobei Bilden des zerbrechlichen Bereichs Ausstanzen von Durchbrüchen in der Trägerkarte einschließt, um die Peripherie der Chipkarte zu definieren, und wobei die lösbaren Verbindungen Brücken umfassen, die über den Durchbrüchen gebildet sind.

12. Verfahren nach Anspruch 10 oder Anspruch 11, wobei der erste Ausschnitt mit gerundeten Enden gebildet ist, wodurch eine Nase gebildet wird.

13. Verfahren nach Anspruch 11, wobei der Stanzprozess Bilden der Peripherie der Karte zu der gleichen Zeit wie Bilden des ersten Ausschnitts (8) beinhaltet, oder der Stanzprozess Bilden der Peripherie der Karte anschließend an das Bilden des ersten Ausschnitts (8) beinhaltet.

14. Verfahren nach einem der Ansprüche 10 bis 13 zur Produktion einer ID-000-Karte in der ID-1-Karte.

## Revendications

1. Support de données (1) comprenant une carte support (3) dans un format ID-1 et une carte à microcircuit (2) fixée contre ladite carte support (3),
ladite carte à microcircuit étant définie dans la carte support par une zone frangible (40) dans ladite carte support (3) qui forme la périphérie de la carte à microcircuit, ladite carte à microcircuit étant généralement rectangulaire avec deux côtés plus longs et deux côtés plus courts, un premier de ces côtés plus courts étant plus proche d'un bord de la carte support qu'un second des côtés plus courts qui est opposé à ce premier côté plus court,
ladite périphérie présentant au moins une liaison libérable (60, 61) entre la carte à microcircuit (2) et la carte support (3) fixant ainsi lesdites carte à microcircuit et carte support l'une à l'autre, l'une desdites au moins une liaison libérable étant située dans le second côté plus court,
ladite liaison libérable (60, 61) située dans le second côté plus court présentant une ligne d'affaiblissement (10) formée dans celui-ci,
**caractérisé en ce que** la carte support (3) inclut, à l'extérieur de la périphérie de la carte à microcircuit (2), au moins une première découpe (8) s'étendant parallèlement à et le long de la ligne d'affaiblissement (10) prévue dans la liaison libérable dans le second côté plus court, cette première découpe présentant des extrémités, la distance entre la ligne d'affaiblissement et la découpe étant de 1,5 mm plus ou moins 1 mm, de sorte que toute force de compression qui a été générée au moment où la formation de la ligne d'affaiblissement a été réalisée a été absorbée par la première découpe.

2. Support de données (1) selon la revendication 1, dans lequel les extrémités de la première découpe sont arrondies.

3. Support de données (1) selon la revendication 1 ou la revendication 2 dans lequel la première découpe (8) est d'une longueur qui est égale ou supérieure à la longueur de la ligne d'affaiblissement.

4. Support de données (1) selon la revendication 3, dans lequel la longueur de la découpe (8) est de 12,5 mm plus ou moins 1 mm.

5. Support de données (1) selon l'une quelconque des revendications précédentes, dans lequel la longueur de la ligne d'affaiblissement est de 7,8 mm plus ou moins 1 mm.

6. Support de données (1) selon l'une quelconque des revendications précédentes dans lequel une première découpe (8) présente une largeur de 1 mm plus ou moins 0,8 mm.

7. Support de données (1) selon l'une quelconque des revendications 1 à 3 dans lequel la distance entre la ligne d'affaiblissement (10) et la première découpe (8) est de 1,2 mm, la largeur de cette découpe (8) est de 1 mm et la longueur de cette découpe est de 12,5 mm.

8. Support de données (1) selon l'une quelconque des revendications précédentes dans lequel la première découpe (8) est remplie d'un matériau qui est plus souple que le matériau formant la carte support (3).

9. Support de données (1) selon l'une quelconque des revendications précédentes dans lequel la surface de la carte est faite en polycarbonate.

10. Procédé de fabrication d'un support de données (1) comprenant une carte support (3) dans un format ID-1 et une carte à microcircuit (2) fixée contre ladite carte support (3), ledit procédé incluant les étapes de :
formation d'une zone frangible (40) qui définit une périphérie pour la carte à microcircuit, ensemble avec des liaisons libérables (60) entre la carte à microcircuit et la carte support, ladite carte à microcircuit étant généralement rectangulaire avec deux côtés plus longs et deux côtés plus courts, avec un premier des côtés plus courts étant plus proche d'un bord de la carte support qu'un second des côtés plus courts qui est opposé à ce premier côté plus court, l'une des liaisons libérables étant prévue dans ce second côté plus court ; et
formation d'une ligne d'affaiblissement (61) dans au moins la liaison libérable prévue dans le second côté plus court, **caractérisé en ce que** pendant la phase d'enlèvement de matériau pour former la périphérie une première découpe (8) présentant des extrémités est formée à l'extérieur de cette périphérie, parallèlement à et le long de la ligne d'affaiblissement de la liaison libérable prévue dans le second côté plus court, la distance entre la ligne d'affaiblissement et la découpe étant de 1,5 mm plus ou moins 1 mm, de sorte que toute force de compression qui a été générée pendant l'étape de formation de la ligne d'affaiblissement soit absorbée par cette première découpe.

11. Procédé selon la revendication 10, dans lequel la formation de la zone frangible inclut le marquage d'ouvertures dans la carte support pour définir la périphérie de la carte à microcircuit et les liaisons libérables comprennent des ponts formés à travers les ouvertures.

12. Procédé selon la revendication 10 ou la revendication 11, dans lequel la première découpe est formée avec des extrémités arrondies formant un nez.

13. Procédé selon la revendication 11, dans lequel le processus de marquage implique la formation de la périphérie de la carte au même moment que la formation de la première découpe (8) ou ledit processus de marquage implique la formation de la périphérie de la carte séquentiellement à la formation de la première découpe (8).

14. Procédé selon l'une quelconque des revendications 10 à 13 pour la fabrication d'une carte ID-000 dans la carte ID-1.
